# FASCICULE DE BREVET EUROPEEN

(11) **EP 3 888 064 B1**
(45) Date de publication et mention de la délivrance du brevet: **06.11.2024**
(21) Numéro de dépôt: 19812751.6
(22) Date de dépôt: 26.11.2019
(51) Int. Cl.: G06T 19/00

(54) **PROCEDE D'AIDE AU MASQUAGE DE SURFACES DE PIECES A PEINDRE OU TRAITER**
VERFAHREN ZUR UNTERSTÜTZUNG DER MASKIERUNG VON ZU LACKIERENDEN ODER ZU BEHANDELNDEN WERKSTÜCKOBERFLÄCHEN
METHOD FOR AIDING THE MASKING OF WORKPIECE SURFACES TO BE PAINTED OR TREATED

(30) Priorité: 27.11.2018 FR 1871951
(43) Date de publication de la demande: 06.10.2021
(73) Titulaire: Safran Landing Systems, 78140 Vélizy-Villacoublay (FR)
(72) Inventeur: GRASSER, Mickaël, 77550 Moissy-Cramayel (FR)
(74) Mandataire: Cabinet Boettcher
(86) Numéro de dépôt international: PCT/EP2019/082638
(87) Numéro de publication internationale: WO 2020/109337

(56) Documents cités:
- MAURICIO A. FRIGO ET AL: "Augmented Reality in Aerospace Manufacturing: A Review", JOURNAL OF INDUSTRIAL AND INTELLIGENT INFORMATION, 1 January 2016 (2016-01-01), XP055606886, ISSN: 2301-3745, DOI: 10.18178/jiii.4.2.125-130
- M. PARK ET AL: "Design and evaluation of an augmented reality welding helmet", HUMAN FACTORS AND ERGONOMICS IN MANUFACTURING & SERVICE INDUSTRIES, vol. 17, no. 4, 1 January 2007 (2007-01-01), pages 317 - 330, XP055606880, ISSN: 1090-8471, DOI: 10.1002/hfm.20077
- SATISH KUMAR: "5 Ways Augmented Reality Revolutionize The Manufacturing | ARP", 4 November 2018 (2018-11-04), XP055607179, Retrieved from the Internet <URL:https://www.augrealitypedia.com/augmented-reality-manufacturing/> [retrieved on 20190719]
- MARGARET PENNEY: "Paint the World with Augmented Reality Apps", 28 September 2017 (2017-09-28), XP055607184, Retrieved from the Internet <URL:https://www.sessions.edu/notes-on-design/paint-the-world-with-augmented-reality-apps/> [retrieved on 20190719]

## Description

L'invention concerne un procédé d'aide au masquage de pièces à peindre ou traiter.

### ARRIERE PLAN DE L'INVENTION

De nombreuses pièces, notamment des pièces de train d'atterrissage d'aéronef, doivent recevoir sur certaines portions de celles-ci des couches d'apprêt, de primaire, de peinture pour la protection de certaines zones soumises à l'air libre et aux intempéries. Les zones à peindre sont en général indiquées par le bureau d'études directement sur le plan de la pièce. Le bureau des méthodes détermine alors les différentes étapes nécessaires à la peinture de la pièce, notamment les étapes de masquage préalable et l'étendue des zones à masquer.

Le masquage est également pratiqué en vue du traitement de certaines portions de la surface de la pièce, par exemple par immersion dans un bain électrolytique.

Les informations de masquage sont bien souvent transmises aux opérateurs sous forme papier, ou sous format PDF. Le document "Augmented Reality in Aerospace Manufacturing: A Review",Journal of Industrial and Intelligent Information, 2016, ISSN: 2301-3745 par Mauricio A. Frigo ET AL décrit des applications de la réalité augmentés dans le domaine de fabrication de pièces aérospatiales.

### OBJET DE L'INVENTION

L'invention a pour objet de proposer une aide au masquage des pièces à peindre ou traiter, permettant d'améliorer la précision du masquage.

### RESUME DE L'INVENTION

En vue de la réalisation de ce but, on propose un procédé d'aide au masquage d'une pièce selon la revendication 1 comportant les étapes de :
- définir à l'aide d'un modèle numérique de la pièce au moins une surface virtuelle de masquage en extrayant du modèle une surface géométrique de la pièce devant être masquée, et en dupliquant la dite surface géométrique ;
- attribuer à la surface virtuelle de masquage ainsi définie des instructions relatives au masquage ;
- à l'occasion du travail d'un opérateur sur une pièce conforme au modèle numérique, prendre au moins une image de la pièce et visualiser pour l'opérateur l'image de la pièce sur laquelle on superpose la surface virtuelle de masquage, en affichant également les instructions associées ;
- et après réalisation d'un masquage de la pièce conforme au modèle numérique, prendre une image de la pièce masquée et une étape mise en œuvre par ordinateur de comparer sur cette image une surface réelle de masquage avec la surface virtuelle de masquage et de déterminer si le masquage réalisé est conforme.

Ainsi l'opérateur voit très précisément sur l'image de la pièce la zone à masquer et prend connaissance des instructions associées, sans avoir à consulter un document.

La bonne réalisation du masquage est contrôlée en prenant au moins une image de la pièce masquée et en comparant sur cette image une surface réelle de masquage avec la surface virtuelle de masquage. Cette comparaison permet de savoir si la surface masquée s'étend bien conformément à la surface virtuelle de masquage. Il est ainsi possible d'identifier sur l'image de la pièce, si elles existent, les zones à masquer qui n'auraient pas été masquées, ou au contraire, les zones de la pièce où la surface réelle de masquage a débordé de la surface de masquage virtuelle.

De préférence, le procédé met en œuvre un algorithme de reconnaissance de formes qui reconnaît la pièce sur l'image prise et un algorithme de réalité augmentée qui superpose sur l'image de celle-ci la surface virtuelle de masquage préalablement définie.

L'image peut être prise avec tout type de capteur adapté.

Selon un mode préféré de mise en œuvre de l'invention, on munit le poste de travail de l'opérateur d'une caméra apte à prendre des images de la pièce en place sur le poste de travail, l'image de la pièce étant alors visualisée sur un écran de contrôle disposé à proximité du poste de travail.

Le procédé de l'invention facilite les opérations de masquage, l'opérateur n'ayant plus à consulter des informations papier, ou sous le format nommé « pdf », pendant l'opération de masquage.

### BREVE DESCRIPTION DES DESSINS

L'invention sera mieux comprise à la lumière de la description qui suit d'un mode particulier de réalisation de l'invention, en référence aux figures des dessins annexés, parmi lesquelles :
- La figure 1 est une vue d'un écran sur lequel le modèle numérique en perspective d'une pièce à masquer est affiché, montrant la définition d'une surface virtuelle de masquage ;
- La figure 2 est une vue d'un poste de travail de masquage sur lequel une pièce a été disposée, le poste étant équipé d'une caméra de prise de vues et d'un écran de contrôle ;
- La figure 3 est une vue d'une image de contrôle prise par la caméra après réalisation du masquage.

### DESCRIPTION DETAILLEE DE L'INVENTION

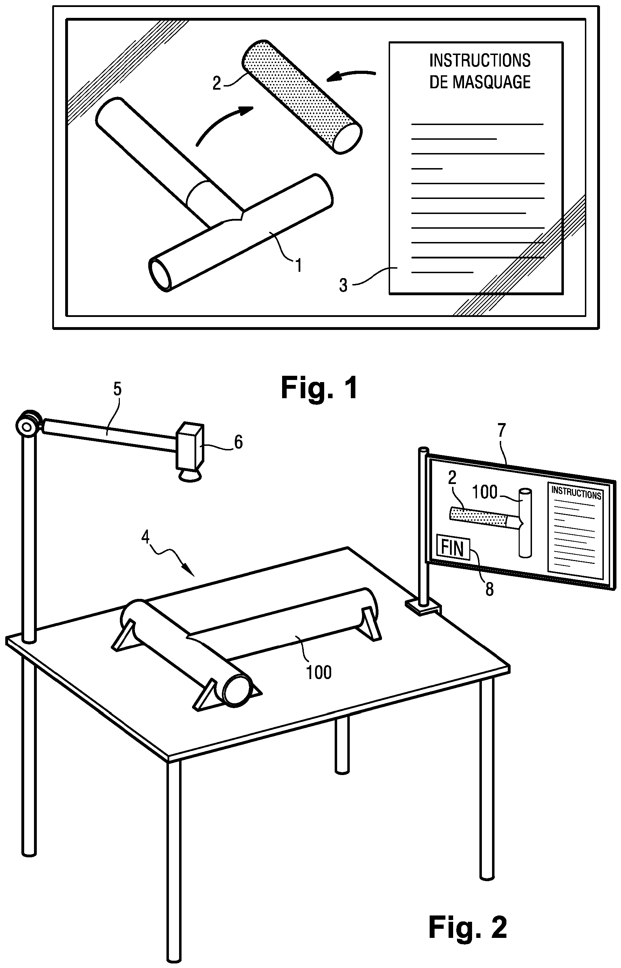

En référence à la figure 1, le procédé de l'invention comporte tout d'abord l'étape de définir à l'aide d'un modèle numérique 1 d'une pièce au moins une surface virtuelle de masquage 2, qui correspond à une zone de la pièce qui doit être masquée lors d'une opération ultérieure de peinture ou de traitement de la pièce. Pour ce faire, il convient d'extraire du modèle numérique la ou les surfaces qui délimitent la pièce au niveau de la zone à masquer, et les dupliquer pour en faire un modèle numérique autonome que l'on appelle ici surface virtuelle de masquage 2. Si plusieurs zones de la pièce sont à masquer pour une même opération de peinture ou de traitement de surface, il est commode de regrouper les surfaces virtuelles de masquage en un même groupe. Sur une pièce de train d'atterrissage, on peut citer à titre d'exemple le groupe des masques nécessaires à une même opération d'application de primaire, d'une peinture de finition, ou d'un revêtement antigravillonnaire. Puis le procédé de l'invention comporte l'étape d'associer des instructions 3 pour la réalisation et le contrôle des masques modélisés par les surfaces virtuelles de masquage.

Par exemple, si le modèle de la pièce a été réalisé avec le logiciel de CAO édité sous la marque CATIA par la société DASSAULT SYSTEMES, on utilise le logiciel CATIA pour extraire et dupliquer les surfaces qui délimitent le modèle numérique de la pièce au niveau de la zone à masquer, et l'outil CATIA COMPOSER pour grouper les surfaces virtuelles de masquage ainsi définies. Puis en utilisant l'outil commercialisé sous la marque DIOTACONNECT par la société DIOTA SOFTWARE, accessible dans CATIA COMPOSER, on associe des instructions de réalisation et/ou de contrôle des masques à chaque surface virtuelle de masquage, ou, le cas échéant, à chaque groupe.

La figure 2 illustre un poste de travail comportant un espace de réception 4 de la pièce 100 et un portique 5 portant une caméra 6 adaptée à prendre des images de la pièce 1. Le poste de travail est par ailleurs muni d'un écran de contrôle 7, ici un écran tactile. Lorsque la pièce 100 est placée sur le poste de travail, la caméra 4 prend des images de la pièce. Un logiciel de masquage activé lors des opérations de masquage met en œuvre un algorithme de reconnaissance de formes pour reconnaître sur les images prises par la caméra 6 les arêtes de la pièce 100 afin d'identifier la pièce et de déterminer son orientation dans l'espace. Puis le logiciel affiche l'image de la pièce 100 sur l'écran de contrôle 7 en superposant la surface virtuelle de masquage 2, de sorte que l'opérateur voit immédiatement sur l'écran quelles sont les zones de la pièce à masquer. De préférence, la surface virtuelle de masquage 2 est visualisée dans une couleur contrastée de sorte qu'elle se distingue nettement sur la pièce. Les instructions de réalisation du masquage 3 sont alors affichées sur l'écran 7, en même temps que la surface virtuelle de masquage 2.

L'opérateur peut alors procéder au masquage de la pièce en suivant les instructions, sur la zone de la pièce 100 indiquée sur l'image de la pièce par la surface virtuelle de masquage affichée en superposition. Une fois le masquage terminé, l'opérateur indique, par exemple par action sur un bouton FIN 8 sur l'écran tactile, que l'opération de masquage en cours est terminée, et le logiciel affiche en tant que de besoin d'autres surfaces virtuelles de masquage, avec les instructions correspondantes.

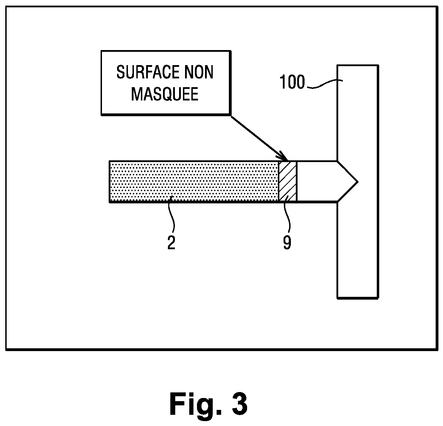

Selon un aspect particulier de l'invention illustré à la figure 3, le procédé de l'invention comporte l'étape de vérifier que le masquage réalisé par l'opérateur s'étend conformément à la surface virtuelle de marquage 2. Pour ce faire, le logiciel de masquage analyse au moins une image de la pièce masquée après que l'opérateur ait signalé la fin des opérations de masquage, compare sur cette image une surface réelle de masquage avec la surface virtuelle de masquage et détermine si le masquage réalisé est conforme, ne recouvre pas assez la pièce, ou au contraire déborde de la surface virtuelle de masquage 2. En l'occurrence ici, le logiciel a détecté une zone 9 que l'opérateur a omis de masquer. Cette zone est mise en surbrillance pour indiquer à l'opérateur l'opération de correction à effectuer.

L'invention n'est pas limitée à ce qui vient d'être décrit, mais englobe au contraire toute variante entrant dans le cadre défini par les revendications.

En particulier, bien qu'ici l'image de la pièce est affichée sur un écran de contrôle du poste de travail, l'image pourra être projetée dans un casque ou des lunettes de réalité augmentée portés par l'opérateur.

Bien qu'ici l'image de la pièce est visualisée sur un écran de contrôle 7 disposé sur le poste de travail, l'image pourra être rendue visible par tout autre moyen, comme par exemple l'utilisation d'un vidéoprojecteur.

Bien qu'ici l'image est prise par une caméra équipant un poste de travail sur lequel le masquage est réalisé, l'image peut être prise de toute autre façon. L'opérateur peut par exemple utiliser une tablette pour prendre une photographie de la pièce sur laquelle il travaille, l'image de la pièce étant alors visualisée sur l'écran de la tablette avec superposition de la surface virtuelle de masquage.

## Revendications

1. Procédé mis en œuvre par ordinateur d'aide au masquage d'une pièce (100) comportant les étapes de, avant travail sur la pièce :
- définir à l'aide d'un modèle numérique (1) de la pièce au moins une surface virtuelle de masquage (2) en extrayant du modèle une surface géométrique de la pièce devant être masquée, et en dupliquant la dite surface géométrique ;
- attribuer à la surface virtuelle de masquage ainsi définie des instructions relatives au masquage (3) ;
- à l'occasion du travail d'un opérateur sur une pièce conforme au modèle numérique, prendre au moins une image de la pièce et visualiser pour l'opérateur l'image de la pièce sur laquelle on superpose la surface virtuelle de masquage, en affichant également les instructions associées ;
- et après réalisation d'un masquage de la pièce conforme au modèle numérique, prendre une image de la pièce masquée et une étape mise en œuvre par ordinateur de comparer sur cette image une surface réelle de masquage avec la surface virtuelle de masquage et de déterminer si le masquage réalisé est conforme.

2. Procédé selon la revendication 1, dans lequel on met en œuvre un algorithme de reconnaissance de formes qui reconnaît la pièce (100) sur l'image prise et un algorithme de réalité augmentée qui superpose sur l'image de celle-ci la surface virtuelle de masquage (2) préalablement définie.

3. Procédé selon la revendication 1 ou 2, dans lequel la pièce (100) est placée sur un poste de travail équipé d'une caméra (6) apte à prendre des images de la pièce et d'un écran de contrôle (7) pour visualiser l'image de la pièce avec superposition de la surface virtuelle de masquage et des instructions.

## Patentansprüche

1. Computerimplementiertes Verfahren zur Unterstützung der Maskierung eines Werkstücks (100), umfassend die Schritte, dass vor der Bearbeitung des Werkstücks:
- mithilfe eines digitalen Modells (1) des Werkstücks zumindest eine virtuelle Maskierungsfläche (2) definiert wird, indem aus dem Modell eine geometrische Fläche des zu maskierenden Werkstücks extrahiert wird und diese geometrische Fläche dupliziert wird;
- der so definierten, virtuellen Maskierungsfläche Maskierungsanweisungen (3) zugeordnet werden;
- im Rahmen der Bearbeitung eines dem digitalen Modell entsprechenden Werkstücks durch einen Bediener zumindest ein Bild des Werkstücks aufgenommen wird und dem Bediener das Bild des Werkstücks angezeigt wird, über welches die virtuelle Maskierungsfläche gelegt wird, wobei auch die zugehörigen Anweisungen angezeigt werden;
- und nach der Durchführung einer dem digitalen Modell entsprechenden Maskierung des Werkstücks, ein Bild des maskierten Werkstücks aufgenommen wird und ein computerimplementierter Schritt ausgeführt wird, bei welchem auf dem betreffenden Bild eine reale Maskierungsfläche mit der virtuellen Maskierungsfläche verglichen wird und dabei bestimmt wird, ob die durchgeführte Maskierung modellkonform ausgeführt ist.

2. Verfahren nach Anspruch 1, wobei ein Mustererkennungsalgorithmus, der das Werkstück (100) auf dem aufgenommenen Bild erkennt, und ein Augmented-Reality-Algorithmus, der die zuvor definierte virtuelle Maskierungsfläche (2) über das Bild des Werkstücks legt, ausgeführt werden.

3. Verfahren nach Anspruch 1 oder 2, wobei das Werkstück (100) auf eine Bearbeitungsstation gelegt wird, die mit einer Kamera (6) zum Aufnehmen von Bildern des Werkstücks und mit einem Kontrollbildschirm (7) ausgestattet ist, der das Bild des Werkstücks überlagert mit der virtuellen Maskierungsfläche und den Anweisungen anzeigt.

## Claims

1. A computer-implemented method of assisting masking a part (100), the method comprising, prior to working on the part, the steps of:
· using a numerical model (1) of the part to define at least one virtual surface (2) for masking by extracting from the model a geometrical surface of the part that is to be masked, and by duplicating said geometrical surface; and
· assigning instructions (3) about masking to the virtual surface for masking as defined in this way; then
· when an operator is working on a part matching the numerical model, taking at least one image of the part and enabling the operator to view the image of the part with the virtual surface for masking superposed thereon while also displaying the associated instructions; and
· after the part matching the numerical model has been masked, taking an image of the masked part and a computer-implemented step to compare on the image the real masked surface with the virtual surface for masking and to determine whether the masking is compliant.

2. A method according to claim 1, wherein there are implemented both a shape recognition algorithm that recognizes the part (100) on the image that has been taken and also an augmented reality algorithm that superposes the previously-defined virtual surface (2) for masking on the image of the part.

3. A method according to claim 1 or claim 2, wherein the part (100) is placed on a workstation provided both with a camera (6) suitable for taking images of the part and also with an inspection screen (7) for displaying the image of the part with the virtual surface for masking and the instructions superposed thereon.
